# EUROPEAN PATENT SPECIFICATION

(11) **EP 3 009 381 B1**
(45) Date of publication and mention of the grant of the patent: **03.10.2018**
(21) Application number: 15189887.1
(22) Date of filing: 15.10.2015
(51) Int. Cl.: B65G 69/00, G01L 5/04

(54) **VEHICLE RESTRAINING APPARATUS WITH SAFETY MECHANISM**
FAHRZEUGRÜCKHALTEVORRICHTUNG MIT SICHERHEITSMECHANISMUS
APPAREIL DE RETENUE DE VÉHICULE AVEC MÉCANISME DE SÉCURITÉ

(30) Priority: 17.10.2014 SE 1451247
(43) Date of publication of application: 20.04.2016
(73) Proprietor: Assa Abloy Entrance Systems AB, 261 22 Landskrona (SE)
(72) Inventor: CEDERQVIST, Christer, 564 32 Bankeryd (SE); KARLSSON, Petter, 561 35 Huskvarna (SE)
(74) Representative: Zacco Sweden AB

(56) References cited:
- EP-A1- 0 782 944
- DE-A1-102012 108 578
- GB-A- 2 438 612
- US-A- 5 365 872
- US-A1- 2011 271 500
- US-B1- 6 318 947

## Description

### TECHNICAL FIELD

The present invention relates to an apparatus for restraining a vehicle at a loading dock according to the preamble of claim 1 and a control system for control of restraining of a vehicle at a loading dock.

### BACKGROUND ART

There is a need for restraining a vehicle at a loading dock/bay during loading and unloading of the vehicle. This restraining is required during icy and snowy conditions for reducing the risk of having the vehicle slipping away during loading/unloading, and, in general, also required for securing the vehicle so that it is not disconnected from the loading dock by mistake during loading and unloading of the vehicle.

There are a lot of known vehicle restraints used for the above purpose. Examples of vehicle restraints are disclosed in GB 2 438 612 A and US 2011/0271500, which discloses an apparatus according to the preamble of claim 1. Both documents disclose a tensioning device, such as a ratchet buckle, applying tension to a tension element, such as a strap or a chain, by means of a handle when the tensioning device and the tensioning element are connected between an anchorage on the vehicle and an anchorage at the loading bay for restraining the vehicle at a loading bay.

A further example is disclosed in US 6,318,947, which reveals a pulling-style restraint adapted for being connected, by means of a tension element, such as a strap, chain or cable, to a leg or bottom fitting of a container. The tension element can be tightened by a take-up device such as a reel, chain-binder, turnbuckle, or combinations thereof. Additional features might include a light that indicates engagement, a twist-lock restraining member, and a firm landing pad on which the container legs may rest.

If it is forgotten to disengage the vehicle restraint when the vehicle drives away from the loading bay, the prior art vehicle restraints may damage the vehicle or the loading bay.

### SUMMARY OF THE INVENTION

It is an object of the invention to provide an apparatus for restraining vehicles at a loading dock, which solve, or at least lessen, the problem mentioned above.

It is an object of the invention to provide an apparatus for restraining a vehicle at a loading dock that not damages the vehicle or the loading dock when the vehicle drives away from the loading dock when the apparatus is engaged to the vehicle and the loading dock.

Another object of the invention is to provide a vehicle restraint that does not injure or at least reduces the injuries to persons being present at the loading dock or in the area around the loading dock when the vehicle drives away from the loading dock when the apparatus is engaged to the vehicle and the loading dock.

These and further objects are achieved by means of an apparatus for restraining vehicles as claimed in the associated independent apparatus claim, preferred variants thereof being defined in the associated dependent claims.

The apparatus for restraining a vehicle at a loading dock according to the independent apparatus claim comprises a retractable coupling adapted to be releasably connected to the vehicle for restraining the vehicle. The apparatus comprises a locking device adapted to be connected to the loading dock. The retractable coupling is connected to the locking device. The locking device comprises a straining and blocking device adapted to tension the retractable coupling and to block release of tension of the retractable coupling and a retracting device adapted to retract the retractable coupling. The apparatus also comprises a safety mechanism adapted to break when the tension of the restraining of the vehicle exceeds a threshold value.

The apparatus eliminates or at least reduces damages to a vehicle or a loading dock, since the safety mechanism breaks when the tension of the restraining of the vehicle exceeds a threshold value, and thereby the safety mechanism of the apparatus breaks instead of the vehicle or the loading dock. The safety mechanism of the apparatus breaks before the vehicle or the loading dock is damaged.

The apparatus eliminates or at least reduces injuries to persons being at or in the area around the loading dock, since the safety mechanism breaks when the tension of the restraining of the vehicle exceeds a threshold value. Thereby no parts of the vehicle or the loading dock are torn off, which parts would have risked hitting a person being present at or in the area of the loading dock.

The apparatus achieves convenient repair of a restraining device being subjected to an incident where the vehicle drives away from the loading dock when the restraining device is engaged to the vehicle and the loading dock.

The above and further objects are also achieved by means of a control system for control of restraining of a vehicle at a loading dock as claimed in the associated claims 7-9.

The control system for control of restraining of a vehicle at a loading dock comprises an apparatus according to claim 1 and at least one sensor adapted to sense a tension of the retractable coupling.

The above advantages of the apparatus are also associated with the control system.

### BRIEF DESCRIPTION OF THE DRAWINGS

The apparatus for restraining vehicles at a loading dock will now be described in more detail with reference to the drawings enclosed, in which examples of presently preferred embodiments of the invention are shown.
Fig. 1 is a perspective view of an exemplary restraining apparatus according to the invention before use,
Fig. 2 is a sectional perspective view of the restraining apparatus along its length in Fig. 1,
Fig. 3 is a perspective view of a coupling device of the restraining apparatus in Figs. 1 and 2 with a retractable coupling pulled in after and before use with a left wall of the housing of the coupling device removed,
Fig. 4 is a perspective view of the restraining apparatus and system in Figs. 1 and 2 but from another angle and with a housing of the coupling device and a preload unit being transparent,
Fig. 5 is a sectional perspective view of the coupling device of Fig. 3 in a tension releasing state with the left wall of the housing removed for revealing a ratchet and pawl mechanism operatively coupled to a winded-up strap that is released in this state,
Fig. 6 is a sectional perspective view of the coupling device of Figs. 3 and 5 in the same tension releasing state as in fig. 3 with the left wall of the housing removed for revealing the ratchet and pawl mechanism and the strap in its released state,
Fig. 7 is a sectional perspective view of the coupling device of Figs. 3, 5 and 6 in the same releasing state with the left wall of the housing removed and the strap in its released state,
Fig. 8 is a sectional perspective view of the coupling device of Figs. 3, and 5 to 7 with a horizontal cut through an rotary axle showing the connection of the parts being rotatable and fixed in relation to each other in the coupling device,
Fig. 9 is a top view of the retractable coupling of the restraining apparatus of Figs. 1 and 2 in the form of a band, and
Fig. 10 is a perspective view of a preloading unit of a restraining apparatus according to the invention with a housing of the preload unit being transparent.

### DETAILED DESCRIPTION

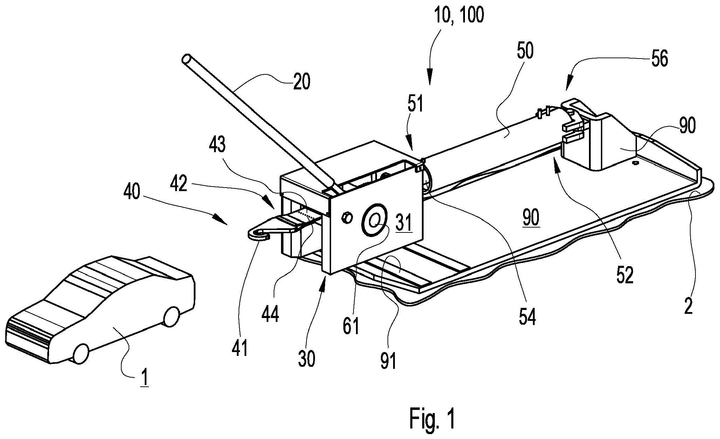

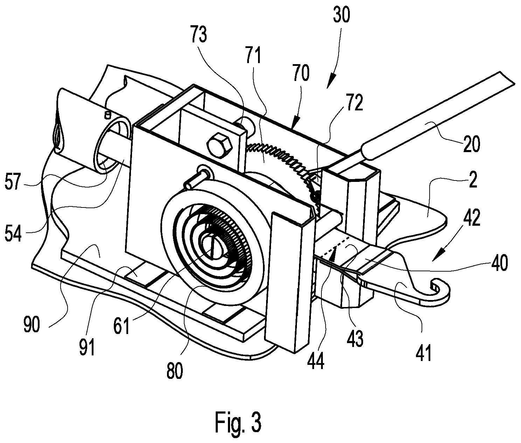

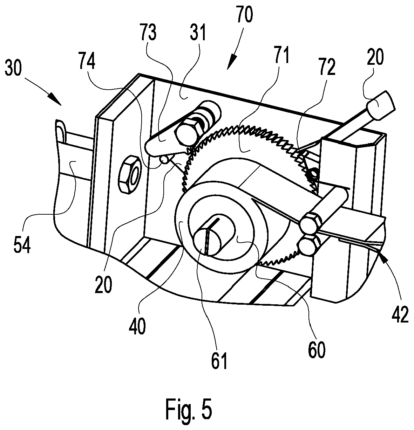

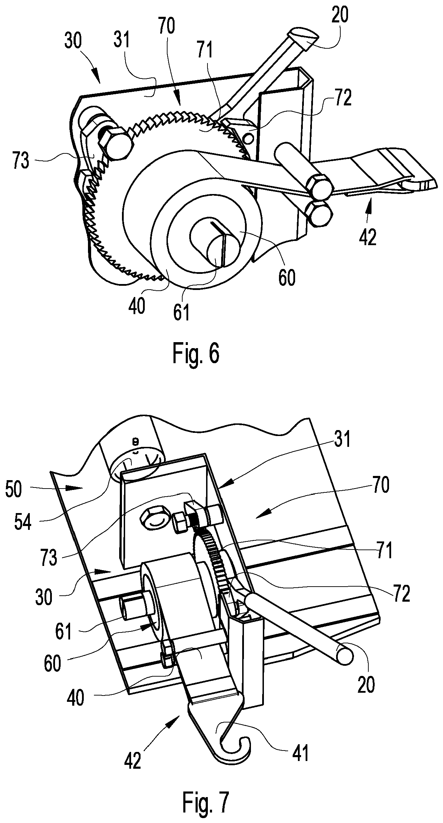

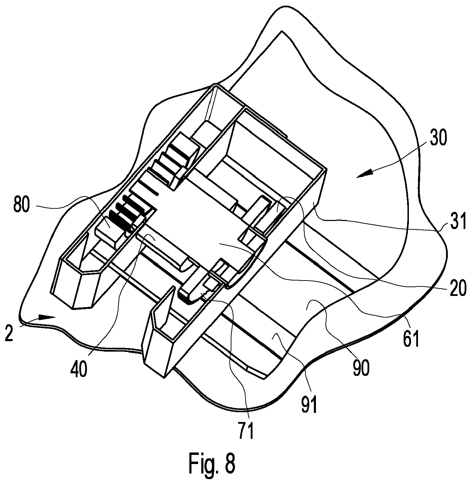

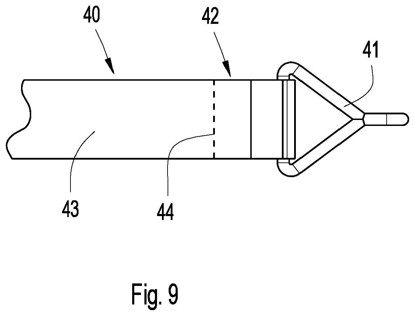

Figs. 1 to 10 disclose a restraining apparatus 10 according to the invention.

As stated above, the apparatus 10 for restraining a vehicle 1 at a loading dock 2 comprises a retractable coupling 40 adapted to be releasably connected to the vehicle 1 for restraining the vehicle 1; and a locking device 30 adapted to be connected to the loading dock 2, wherein the retractable coupling 40 is connected to the locking device 30, wherein the locking device 30 comprises a straining and blocking device 70 adapted to tension the retractable coupling 40 and to block release of tension of the retractable coupling 40 and a retracting device 60, 80 adapted to retract the retractable coupling 40; wherein the apparatus comprises a safety mechanism 44 adapted to break when the tension of the restraining of the vehicle exceeds a threshold value.

As also stated above, the apparatus eliminates or at least reduces damages to a vehicle or a loading dock, since the safety mechanism breaks when the tension of the restraining of the vehicle exceeds a threshold value, and thereby the safety mechanism of the apparatus breaks instead of the vehicle or the loading dock. The safety mechanism of the apparatus breaks before the vehicle or the loading dock is damaged. Further, the apparatus eliminates or at least reduces injuries to persons being at or in the area around the loading dock, since the safety mechanism breaks when the tension of the restraining of the vehicle exceeds a threshold value. Thereby no parts of the vehicle or the loading dock are torn off, which parts would have risked hitting a person being present at or in the area of the loading dock. In addition, the apparatus achieves convenient repair of a restraining device being subjected to an incident where the vehicle drives away from the loading dock when the restraining device is engaged to the vehicle and the loading dock.

In one aspect, the retracting device 60, 80 preloads the retractable coupling 40 when the retractable coupling 40 is connected to the vehicle 1. Thereby, the retractable coupling does not have to be completely by the restraining and blocking device, since the retracting device preloads and achieves an initial straining of the retractable coupling before the restraining and blocking device is operated. Further, the preloading of the retractable coupling by means of the retracting device results in that the retractable coupling does not trail on the ground before operation of the restraining and blocking device. In one aspect, the retracting device 60, 80 retracts the retractable coupling 40 when the retractable coupling 40 is disconnected from the vehicle 1. Thereby, the retractable coupling is retracted into the locking device and does not lie and trail on the ground. The straining and blocking device may be adapted to tension the retractable coupling when the retractable coupling is connected to a vehicle.

The safety mechanism 44 is a perforation in the retractable coupling 40.

In one aspect, the retracting device 60, 80 comprises a spool 60 onto which the retractable coupling 40 is windable, wherein the retracting device 60, 80 comprises a spring 80 biasing the spool 60 for retracting the retractable coupling 40. A spring biased spool is a convenient way of obtaining automatic retraction of the retractable coupling. In one aspect, the straining and blocking device 70 is operatively connected to the spool 60.

The safety mechanism 44 is adapted to break before any other part or portion of the apparatus 10 breaks when the tension of the restraining of the vehicle increases. The safety mechanism should break first when the tension increases to achieve a controlled and safe breakage of the apparatus in order to prevent the vehicle and loading dock from damages. In one aspect, the threshold value is chosen such that the safety mechanism breaks before any other part of the apparatus breaks when the tension of the restraining of the vehicle increases.

The retractable coupling 40 comprises the safety mechanism 44. By arranging the safety mechanism in the retractable coupling a safe breakage is obtained, since no parts of the locking device will rapture and be thrown through the air. Further, easy repair of the apparatus is achieved, since the retractable coupling is easily replaced, e.g. due to that the retractable coupling at least partially is located outside the locking device.

The retractable coupling 40 comprises a first end attached to the locking device 30 and a second end 42 adapted to be releasably connected to the vehicle 1, wherein the safety mechanism 44 is present at the second end 42 of the retractable coupling 40. By arranging the safety mechanism at the second end that is connectable to the vehicle, the safety of the apparatus is improved. When the retractable coupling breaks at its end being connected to a vehicle, the portion of the retractable coupling still connected to the vehicle after breakage is relatively small and the free end of the portion still connected to the vehicle is thereby relatively harmless when swinging into the air. The second end is intended to be attached to the vehicle.

In one aspect, the retractable coupling 40 comprises an attachment means 41 adapted to be releasably connected to the vehicle 1 and the safety mechanism 44 releases the attachment means 41 from the apparatus when the tension of the restraining of the vehicle exceeds the threshold value. An attachment means, such as a hook, is a convenient way of connect the retractable coupling to the vehicle. By releasing the attachment means from the apparatus when the safety mechanism breaks, the attachment means is still connected to the vehicle and does not swing into the air like a projectile. Thereby, the risk of damages to the vehicle, the loading dock or other constructions or cars as well as the risk of injuries to persons being in proximity of the apparatus is reduced or eliminated since no attachment means can swing into the air like a and hit any of the mentioned objects or any person. In one aspect, the attachment means 41 is a hook 41.

In one aspect, the second end has an attachment means 41 adapted to be releasably connected to the vehicle 1, wherein the safety mechanism 44 releases the attachment means 41 from a major portion of the retractable coupling 40 at the second end of the retractable coupling 40 when the tension of the restraining of the vehicle exceeds the threshold value. By having an attachment means at a second end of the retractable coupling and releasing the attachment means at the second end, the safety is further increased, since the attachment means is still connected to the vehicle when the safety mechanism breaks and does not swing into the air like a projectile. Further, the minor portion of the retractable coupling still connected to the vehicle after breakage is relatively small and the free end of the portion still connected to the vehicle is thereby relatively harmless when swinging into the air. Due to the breakage, the major portion of the retractable coupling does not have any attachment means at its free end that can swing into the air and cause damages or injuries. In addition, the major portion is retracted into the locking device by means of the retracting device possibly further reducing the harmful effects of the major portion of the retractable coupling after breakage. The safety mechanism may release the attachment means from the retractable coupling close to the second end of the retractable coupling. In one aspect, the attachment means 41 is a hook 41 attached to a second, outer 42 end of the retractable coupling.

The safety mechanism 44 is a perforation 44 in the retractable coupling 40. By having a perforation in the retractable coupling, there is an assigned place for breakage in the retractable coupling. This increases the control over the breakage. The perforation also reduces the strength of the retractable coupling, which implies that a breakage will occur at the perforation. The perforation may be through the retractable coupling. The perforation may be regular or irregular.

In one aspect, the retractable coupling 40 comprises a band 43 and the band 43 comprises the safety mechanism 44. A band is suitable as a connection between the loading dock and the vehicle, since a band is flexible, soft, easily handled and convenient to e.g. wind upon a spool. By arranging the safety mechanism in a band, breakage of a soft part is obtained, which results in reduced risk of injuries and damages, since the raptured part in the form of a band is soft when possibly hitting persons or equipment.

The safety mechanism 44 is designed as a reduced mechanical strength. Reducing the mechanical strength is a suitable way of obtaining breaking of the safety mechanism. The mechanical strength can conveniently be reduced to achieve breakage of the safety mechanism at a desired threshold value, such that a controlled breakage is obtained.

The safety mechanism 44 is designed as a reduced mechanical strength of the retractable coupling 40. By reducing the strength of the retractable coupling to achieve the safety mechanism a safe breakage is achieved in a convenient way, since no parts of the locking device will rapture and be thrown through the air. Further, easy repair of the apparatus is achieved, since the retractable coupling is easily replaced, e.g. due to that the retractable coupling at least partially is located outside the locking device. In one aspect, the safety mechanism is designed as a reduced mechanical strength of a band of the retractable coupling. In one aspect, the safety mechanism is designed as a reduced mechanical strength of a second, outer end of a band of the retractable coupling. In one aspect, the reduced mechanical strength corresponds to the threshold value.

In one aspect, the threshold value of the tension of the restraining of the vehicle is in the interval 2 000 to 120 000 Newton, such as 7 500 to 100 000 Newton, such as 15 000 to 50 000 Newton, such as 30 000 to 40 000 Newton.

A suitable threshold value for a vehicle in the form of a light vehicle, such as a van or pickup, starts at 2 000 Newton. A preferred lower threshold value for a vehicle in the form of a light vehicle, such as a van or pickup, is 7 500 Newton. A suitable threshold value for a vehicle in the form of a heavy vehicle, such as a truck or lorry, starts at 11500 Newton. A preferred lower threshold value for a vehicle in the form of a heavy vehicle, such as a truck or lorry, is 30 000 Newton. A suitable upper threshold value is 120 000 Newton, such as 100 000 Newton, such as 50 000 Newton, such as 40 000 Newton. These lower and upper threshold values can be combined with each other in any combination.

In one aspect, the restraining apparatus 10 comprises a control arrangement 20 adapted to control tensioning and release of the tension of the restraining of the vehicle. The control arrangement 20 may control tensioning and release of the tension of the restraining of the vehicle by operation of the straining and blocking device 70.

In one aspect, the restraining apparatus 10 comprises a preloading unit 50 being attached at one end 51 to the locking device 30 and attached at the other end 52 to the loading dock 2, which preloading unit 50 is adapted to preload the restraint of the vehicle 1. The preloading unit 50 may be adapted to preload the restraint of the vehicle 1 by means of a suspension 53 being compressed when restraining the vehicle 1.

In one aspect, the spool 60, onto which the retractable coupling 40 is windable, is preloaded by the spiral spring 80, such that the retractable coupling 40 is retracted and held in its retracted state when not in use, which preload gives a biasing that is possible to counteract when manually pulling out the retractable coupling 40 from the locking device 30 for connection to the vehicle 1.

In one aspect, the straining and blocking mechanism 70 is a ratchet and pawl mechanism 70 of the locking device 30 comprising a ratchet 71 fixedly connected to the spool 60, a carrier pawl 72, a stationary pawl 73 and a control arrangement 20. The control arrangement may be rotatably attached to the ratchet 71 and provided with the carrier pawl 72. The stationary pawl 73 may be pivotally attached to a stationary housing 31 of the locking device 30. The control arrangement 20 may be in the form of a control lever 20.

In one aspect, the carrier pawl 72 is pivotally attached to the control arrangement 20 and the control arrangement is provided with a protrusion 74 being adapted to disengage the stationary pawl 73 from the ratchet 71 for releasing the tension of the restraining of the vehicle 1.

In one aspect, the housing 31 of the locking device 30 is provided with said protrusion 75 being adapted to disengage the carrier pawl 72 from the ratchet 71 for releasing the tension of the restraining of the vehicle 1.

In one aspect, the disengagement of the stationary pawl 73 from the ratchet 71, and the disengagement of the carrier pawl 72 from the ratchet 71 are adapted to occur simultaneously for releasing the tension of the restraining of the vehicle 1.

In one aspect, the carrier pawl 72 is attached to the control lever 20 and the protrusion 74 of the control lever is provided on the control lever 20 such that the stationary pawl 73 is disengaged from the ratchet 71 by the protrusion 74 of the control lever simultaneously as the carrier pawl 72 is disengaged from the ratchet 71 by the protrusion 75 of the locking device for releasing the tension of the restraining of the vehicle 1.

The safety mechanism may be any part or portion of the retractable coupling adapted to break when the tension of the restraining of the vehicle exceeds a threshold value. The safety mechanism is designed as a reduced mechanical strength of a part or portion of the retractable coupling.

By a reduced mechanical strength of a part or portion is meant a mechanical strength that implies that the part or portion breaks before any other part or portion of the restraining apparatus breaks. In other words, the mechanical strength of the part or portion forming the safety mechanism is chosen such that the part or portion forming the safety mechanism breaks before any other part or portion of the restraining apparatus breaks.

In one aspect, the safety mechanism is a perforation 44 of the band 43 of the retractable coupling 40.

A version of a restraining apparatus 10 according to the invention will be described with reference to the Figs. 1 to 10.

The restraining apparatus 10 for restraining vehicles at a loading dock comprises a control arrangement 20 for operating a locking device 30. The apparatus 10 comprises a retractable coupling 40 that is releasably connected to the vehicle to be restrained. The control arrangement 20 is used for controlling tensioning and release of the tension in the vehicle restraint.

The control arrangement 20 may be a motor arrangement enabling an automatic retracting of the retractable coupling 40 into the locking device 30 when not in use. Such a motor arrangement would also make it possible to tighten any occurring slack of the retractable coupling 40 if a slack threshold value is reached after restraining the vehicle 1. Another application of a control arrangement may be a manually operated control lever 20. The control lever 20 may be rotatably attached to the locking device 30. Moreover, a combination of a motor and a manual control lever is possible. The motor would have the ability of automatically retracting the retractable coupling 40 for restraining the vehicle and/or be able to tighten any occurring slack of the retractable coupling 40. At the same time, the manual control lever 20 could be used as a safety device if power is lost and/or be used as a manual releaser of the tension in the retractable coupling 40 when the vehicle is to be disengaged from the loading dock. This latter manual release function is explained further below.

A preloading unit 50 is also comprised in the apparatus 10 above. This preloading unit 50 is attached at one, first end 51 to the locking device 30. The preloading unit 50 is attached at its other, second end 52 to the loading dock 2. The purpose of the preloading unit 50 is to preload the restraint of the vehicle 1 by means of a suspension 53 being compressed when restraining the vehicle.

The locking device 30 of the restraining apparatus 10 comprises a retracting device 60, 80 for retracting the retractable coupling 40. The retracting device 60, 80 comprises a spool 60 onto which the retractable coupling 40 is windable, so that it may be coiled up onto the spool 60 when not in use and unwound when the vehicle 1 is to be restrained. The locking device 30 also comprises a back stop or blocking device 70 used for hindering any back lashing and any undesired reverse movement of rotating parts of the locking device 30 during and after restraining the vehicle 1. One possible application of the back stop or blocking device may be a ratchet and pawl mechanism 70, 71, 72, 73, 74, 75 operatively connected to the control arrangement/lever 20 and the rotatable spool 60. The blocking device 70 also strains the retractable coupling 40 when operated by the control arrangement/lever 20. Thereby, the blocking device 70 can also be considered to be a straining device. The retracting device 60, 80 further comprises a spiral spring 80 rotatively biasing the spool 60 for preloading and retracting the retractable coupling 40 when it is to be pulled into the locking device 30. The locking device 30 is movable in at least one degree of freedom, i.e. sideways/laterally, pivotably and linearly in substantially the horizontal plane in relation to the vehicle 1 and the loading dock 2, by being slidably supported against the loading dock 2. This enables horizontal movements of the locking device 30 in response to vehicle movements for achieving a flexible and not too rigid coupling therebetween.

Moreover, the locking device 30 of the restraining apparatus 10 is arranged on a bracket 90. The bracket 90 is adapted to be firmly attached to the loading dock 2, e.g. by fastening means in the form of screws. The locking device 30 is slidably supported against a sliding surface 91 on the bracket. The preloading unit 50 may also be arranged on the bracket 90. The preloading unit 50 is articulately attached at its other end 52 to the bracket. This articulated attachment of the preloading unit 50 at its other end 52 to the bracket 90 is accomplished by means of a rotating or pivot joint 56 shown in Figs. 1, 2, and 4. Furthermore, the locking device 30 and the preloading unit 50 are adapted for arrangement on the bracket 90 forming a unit by means of the bracket 90 forming a common platform, which in turn is attached to the loading dock 2. Functionally, the spool 60, onto which the retractable coupling 40 is windable, is preloaded by the spiral spring 80. This enables the retractable coupling to be retracted and held in its retracted state when not in use. The biasing of spiral spring 80 generates a preload, but, which preload is possible to counteract when manually pulling out the retractable coupling 40 from the locking device 30 when connecting it to the vehicle. This constant biasing back into the locking device for the retractable coupling 40 eliminates any slack of the retractable coupling.

The ratchet and pawl mechanism 70 of the locking device 30 comprises a ratchet 71, a carrier pawl 72, a stationary pawl 73 and the control lever 20. The control lever 20 is rotatably attached to the ratchet 71 and provided with the carrier pawl 72. The stationary pawl 73 is in turn pivotally attached to a stationary housing 31 of the locking device 30. The carrier pawl 72 of the control lever 20 is pivotally attached to the control lever 20. The control lever 20 is provided with a protrusion or pin 74 that is adapted to disengage the stationary pawl or blocking heel 73 of the stationary housing 31 from the ratchet 71 for releasing the tension of the restraining of the vehicle 1. The same or complementary function is achieved by means of a protrusion or pin 75 attached to the housing 31 of the locking device 30. The protrusion or pin 75 is adapted to disengage the carrier pawl 72 from the ratchet 71 for releasing the tension of the restraining of the vehicle 1. The disengagement of the stationary pawl 73 of the stationary housing 31 from the ratchet 71 and the disengagement of the carrier pawl 72 of the control lever 2 from the ratchet 71 are adapted to occur simultaneously for releasing the tension of the restraining of the vehicle 1. The carrier pawl 72 and the protrusion 74 of the control lever are arranged on the control lever 20 in relation to the location of the protrusion 75 of the locking device and the location of the stationary pawl 73.

In other words, the locking device 30 of the invention may be defined as a roller belt or roller band (the biased spool 60 and the retractable band 43) with the hook 41. When a vehicle 1, e.g. a truck or lorry is parked against a loading dock 2, the band 43 is rolled out and the hook 41 is fastened to the vehicle, for example to the ICC bar of the vehicle. The band 43 is then tightened or preloaded by rolling it up on the spool 60 by the ratchet and pawl mechanism 70 with the control lever 20. The spool 60 and the ratchet and pawl mechanism 70 are connected on the bracket 90 to a spring device in the form of the preload unit 50. This preload unit 50 gives the vehicle some possibility to move without being dislocated, and to maintain tension to the band/belt 43. The spool 60 and the ratchet and pawl mechanism 70 are so attached to the bracket 90 that they may slide sideways while pivoting around the rotating joint 56 to be more adaptable to the movements of the vehicle. The band may be made of polyester or any other suitable material.

A safety mechanism 44 in the form of a perforation 44 of the band 43 is located at the second end 42 of the band 43. The perforation 44 is located near the second end 42 of the band where the hook 41 is connected to the band 43. When the restraining apparatus 10 is connected to the vehicle 1 and the loading dock 2 and the vehicle 1 tries to drive away from the loading dock 2 such that the force of the restraining of the vehicle exceeds a threshold value as discussed above, the perforation 44 of the belt 43 makes the belt 43 rapture at the location of the perforation 44. Thereby, the hook 41 is separated from a major part of the band 43, which major part comprises the portion of the band 43 being on the side of the perforation 44 facing the locking device 30. Only a minor part of the band 43 is after the rapture connected to the hook 41. The minor part of the band 43 comprises the portion of the band 43 being on the side of the perforation 44 facing the hook 41. The hook 41 and the minor part of the band 43 is small and most probably still connected to the vehicle 1 and thus harmless to people and equipment located in the area of the restraining apparatus. The major part of the band 43 is only a band without any hard pieces that can swing and hurt persons or damage equipment present in the area surrounding of the restraining apparatus. Only the major part of the band 43 itself may hit persons or equipment present in the area that the major part of the band reaches and thereby the possible injuries and damages are minimized. The retracting device 60, 80 automatically retracts the major part of the raptured band and thereby the possible injuries and damages caused by the major part of the raptured band may be further reduced.

Since the band has a safety mechanism 44 in the form of a perforation 44, the band ruptures in a controlled way before the tension of the band becomes too high and hazardous for persons and equipment in the area surrounding the restraining apparatus. A too high tension of the band when the band ruptures results in a rapid and/or swinging motion having a lashing character, which risk hurting persons and damaging equipment present in the area that the major part of the band reaches.

According to a preferred embodiment of the invention, there are at least two separate preloads or biasing functions used in the restraining apparatus 10.

One preload or biasing is achieved by the spiral spring 80 that "automatizes" the retracting or pulling in of the retractable coupling 40 in the form of a band 43 with a hook 41 at its second, free end 42 when not in use. The retractable coupling 40 is securely fastened at its first, inner end (not shown) to the spool 60. The retractable coupling 40 is adapted to be rolled up/in on the spool 60 in the form of a roller being rotatatively biased/winded-up a certain number of revolutions by the spiral spring 80. This enables an automatic winding-in of the hook 41 and the free end 42 of the retractable coupling 40 for eliminating any loose ends that is cumbersome to handle and any risk of tripping over it. In regard of the preload or biasing of the retractable coupling 40, this may be achieved in the following way by for example use of a spool/roller shaft or axle 61 having a diameter of 60 mm. This axle 61 is an attachment for at least the spiral spring 80, the spool 60, the ratchet 71, and the control lever 20. The axle 61 is rotatably arranged in the housing 31 of the locking device 30. Here, if a 10 revolutions spiral or motor spring 80 is used, this allows for a band length of maximum 3 m (about 20 revolutions are then available for winding up the spiral spring 80 and winding in the retractable coupling 40) and the spool diameter onto which the band/strap 43 of the retractable coupling 40 is coiled up may then be between 60 - 140 mm.

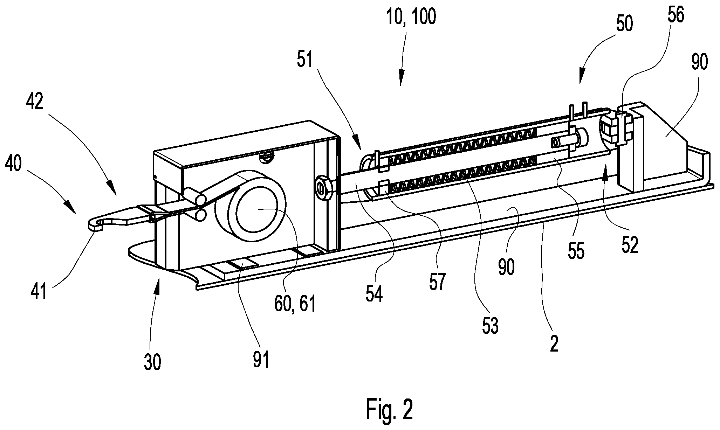

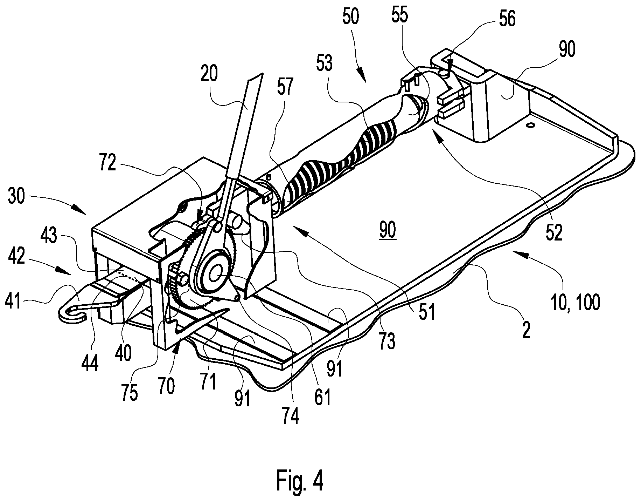

The other preload or biasing of the restraining apparatus 10 according to the invention is achieved by the preload unit 50 that may be achieved with a preload by means of a plurality of disc springs 53. In case of an apparatus for a vehicle in the form of a heavy vehicle, such as a truck or lorry, the preload form the preload unit 50 may be achieved in the following way: A force of 180 N pulling on the control lever gives between 2 - 5 kN in tension force. Hence, a preload of 2 kN may be achieved by using 36 pieces of disc springs 53 stapled along a length of the cylinder-like housing of the preload unit 50 in its axial direction (see Figs. 2 and 4). The disc springs 53 may be of the dimension 50/25.4 x 1.5 (16 pieces) and 50/25.4 x 3 (20 pieces) for corresponding to a preload length of 25 mm. Allowed suspension in this system is +/- 25 mm at 2.6 kN preload, while a maximum compressed suspension may give a preload of 15 kN.

The locking device 30 is connected to the preload unit 50 at its first end 51 by means of a first end of an elongated shaft or axle 54.

The shaft 54 is attached with a second axle end to a piston-like cylinder 55 in the preload unit 50 closer to its second end 52. The shaft 54 works in the similar way as a drawbar on a vehicle or a tie rod being pulled when restraining the vehicle and acts as a piston rod on the piston cylinder 55 compressing the disc springs 53 a certain distance in direction towards the locking device 30 and the vehicle until a predetermined desired preload and a desired tension of the vehicle restraint is achieved. The preload unit 50 comprises a preload anvil 57 at its first end 51 for holding the disc springs 53 in place and making the preload unit a sealed unit.

This restraining of the vehicle 1 is done by cranking the control lever 20 in known way back and forth, whereby the locking device 30 moves by sliding on the sliding surface 91 of the bracket 90 towards the vehicle 1 until the desired tension of the vehicle restraint is achieved and the cranking is stopped. In this tensioned state, the lever may be left in the position shown in Fig. 4 during loading/unloading of the vehicle. Then, when the vehicle is to be disengaged from the loading dock 2, the tension of the restraint is released by rotating the free end of the control lever 20 towards the vehicle until an end position shown in Figs. 1, 3, 5, 6, and 7 for releasing the tension. This tension release is performed by pushing the control lever 20 distinctly a short distance towards the vehicle in this forward position, whereby the carrier pawl 72 is pressed with one end against the pin 75 of the locking device housing 31 for lifting the other end of carrier pawl 72 out of engagement with the ratchet 71 (the pivot of the carrier pawl 72 is arranged between its ends), while, at substantially same time or simultaneously, the pin 74 on the control lever 20 lifts the engaging end of the stationary pawl 73 or blocking heel out of engagement with the ratchet 71, whereby the ratchet 71 is released and rotates forwards towards the vehicle 1 releasing the tension in the retractable coupling 40. Then, the hook 41 is easily hooked off the vehicle and the free end 42 of the retractable coupling 40 pulled in by means of the spiral spring 80.

The preload unit 50 is rotatable or pivotally attached at its second end 52 to the bracket 90 by means of the rotating joint 56 shown in Figs. 1, 2, and 4. This rotating joint 56 has a rotary axis extending substantially vertically or vertically for enabling rotation or pivoting of the preload unit 50 and the locking device 30 in substantially the horizontal plane, so that the locking device may slide laterally on the sliding surface 91 of the bracket 90 to the left or right in Figs. 1, 2, 3 and 4 besides the freedom of sliding movement towards and away from the vehicle 1 during restraining and at release of the restraining. Hence, the rotating joint 56 eliminates or at least reduces movement of the preload unit 50 and the locking device 30 in the vertical direction, i.e. perpendicularly in relation to the sliding surface 91 of the bracket 90. This eliminates the risk of injury caused by crushing (squeezing) between the underside of the locking device 30 and the bracket 90. Hence, the locking device 30 is in principle telescopically or piston-like connected to the preload unit 50 as the shaft 54 connecting them movably together slides in and out of the preload unit 50 similar to a telescope or piston.

Figs. 1 to 10 also disclose a control system 100 according to the invention.

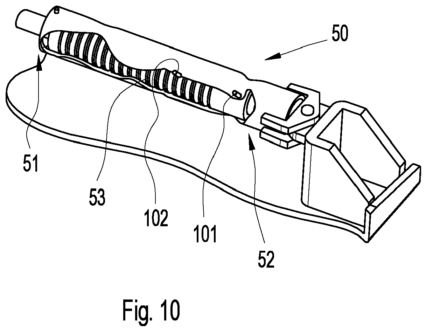

The control system 100 for control of restraining of a vehicle 1 at a loading dock 2 comprises an apparatus 10 for restraining a vehicle 1 at a loading dock 2, wherein the apparatus 10 comprises a coupling 40 adapted to be connected to the loading dock 2 and to be releasably connected to the vehicle 1 for restraining the vehicle 1; wherein the control system 100 comprises at least one sensor 101, 102 adapted to sense a tension of the coupling. This is visualized in figure 10.

In one aspect, the control system comprises a first sensor 101 adapted to sense when the tension of the coupling 40 has reached a first load during restraining of the vehicle. The first load preferably corresponds to a tension that is sufficient to restrain the vehicle at the loading dock. Thereby, the control system senses that the vehicle is restrained at the loading dock and thereby loading or unloading of the vehicle can start. Also operation of the movable parts of the loading dock can start. In one aspect, the control system comprises an indicator, such as a light signal, indicating that the first sensor has sensed that the tension of the coupling has reached the first load. The indicator can for example be a light signal emitting a red signal when the first sensor not senses that the tension of the coupling has reached the first load, i.e. when the tension of the coupling is below the first load. The light signal can for example emit a green signal when the first sensor senses that the tension of the coupling has reached the first load, i.e. when the tension of the coupling is above the first load. In one aspect, the control system is adapted to block operation of movable parts of the loading dock, when the first sensor not senses that the tension of the retractable coupling has reached the first load. In one aspect, the control system is adapted to enable operation of movable parts of the loading dock, when the first sensor senses that the tension of the coupling has reached the first load. The first load may be about 2000-8000 N, such as 2000-3000 N.

In one aspect, the control system comprises a second sensor 102 adapted to sense when the tension of the coupling 40 has reached or exceeded a second load. The second load can for example be reach or exceeded during restraining of the vehicle or when the vehicle drives away from the loading dock when the coupling is engaged to the vehicle and the loading dock, e.g. during loading or unloading of the vehicle. The second load preferably corresponds to a tension that indicates that the tension of the coupling is too high, such as that the vehicle drives away from the loading dock when the coupling is engaged to the vehicle and the loading dock or that the coupling becomes too tensioned during restraining of the vehicle. Thereby, the control system senses that the tension of the coupling is too high as a result of an improper handling or event. In one aspect, the control system comprises an indicator, such as a light signal, indicating that the second sensor has sensed that the tension of the coupling has reached or exceeded the second load. The indicator can for example be a light signal emitting a flashing red signal, or alternatively a yellow or orange signal, when the second sensor senses that the tension of the coupling has reached or exceeded the second load, i.e. when the tension of the coupling is equal to or above the second load. In one aspect, the control system is adapted to block operation of movable parts of the loading dock, when the second sensor senses that the tension of the coupling has reached or exceeded the second load. In one aspect, the control system comprises an indicator in the form of an audio signal indicating that the second sensor has sensed that the tension of the coupling has reached or exceeded the second load. One or several indicators can be combined, e.g. may a light signal, such as a flashing red light signal, be combined with an audio signal. The second load may be about 10 000 to 15 000 N.

A control system comprising a first sensor 101 and a second sensor 102 according to above may be arranged as an anti-theft system. When the first sensor 101 that the tension of the coupling 40 is above the first load and the second sensor 102 does not sense that the tension of the coupling is above the second load, the control system senses that the vehicle is still in its proper location, such as in the location where the vehicle is parked. If the coupling is disconnected from the vehicle, the tension of the coupling will decrease to below the first load, which is indicated by an indicator and then a possible theft is detected. The indicator may be an alarm, such as an audio signal, or a signal sent to an alarm system. If the vehicle drives away from the loading dock when the coupling is engaged to the vehicle and the loading dock, the tension of the coupling will increase to above the second load, which is indicated by an indicator and then a possible theft is detected. The indicator may be an alarm, such as an audio signal, or a signal sent to an alarm system.

In one aspect, the apparatus of the control system comprises a safety mechanism 44 adapted to break when the tension of the coupling reaches or exceeds a third load. The third load may be about 30 000 to 40 000 N.

In one aspect, the apparatus 10 of the control system 100 comprises a locking device 30 adapted to be connected to the loading dock 2, wherein the coupling 40 is connected to the locking device 30, wherein the locking device 30 comprises a straining and blocking device 70 adapted to tension the coupling 40 and to block release of tension of the coupling 40.

In one aspect, the apparatus 10 of the control system 100 comprises a preloading unit 50 being connected at a first end 51 to the coupling 40 and attached at a second end 52 to the loading dock 2, which preloading unit 50 is adapted to preload the restraint of the vehicle 1. The preloading unit 50 may be adapted to preload the restraint of the vehicle 1 by means of a suspension 53 being compressed when restraining the vehicle 1.

In one aspect, the first sensor 101 maybe operatively connected to the preloading unit 50. The first sensor 101 may be arranged at or adjacent the second end 52 of the preload unit, see figure 10. The first sensor 101 may be arranged at a first distance from the second end 52. The first sensor 101 may be arranged to sense the movement of the suspension 53. The first sensor 101 may be arranged to sense that the suspension 53 is compressed to a state corresponding to the first load.

In one aspect, the second sensor 102 maybe operatively connected to the preloading unit 50. The second sensor 102 may be arranged adjacent the second end 52 of the preload unit, but at a distance from the second end 52, see figure 10. The second sensor 102 may be arranged at a larger distance from the second end 52 than the first sensor 101. The second sensor 102 may be arranged closer to the first end 51 than the first sensor 101. The second sensor 102 may be arranged at a second distance from the second end 52. The second distance is preferably larger than the first distance. The second sensor 102 may be arranged to sense the movement of the suspension 53. The second sensor 102 may be arranged to sense that the suspension 53 is compressed to a state corresponding to the second load.

In one aspect, the apparatus 10 of the control system 100 is an apparatus according to above. The apparatus 10 of the system 100 may be an apparatus 10 according to any embodiment, aspect, variant, version and the like according to above.

The foregoing has described the principles, preferred embodiments and modes of operation of the present invention. However, the description should be regarded as illustrative rather than restrictive, and the invention should not be limited to the particular embodiments and aspects discussed above. As mentioned above, the different features of the various embodiments of the invention can be combined in other combinations than those explicitly described. It should therefore be appreciated that variations may be made in those embodiments by those skilled in the art without departing from the scope of the present invention as defined by the following claims.

## Claims

1. Apparatus (10) for restraining a vehicle (1) at a loading dock (2), comprising
- a retractable coupling (40) adapted to be releasably connected to the vehicle (1) for restraining the vehicle (1),
- a locking device (30) adapted to be connected to the loading dock (2), wherein the retractable coupling (40) is connected to the locking device (30), wherein the locking device (30) comprises a straining and blocking device (70) adapted to tension the retractable coupling (40) and to block release of tension of the retractable coupling (40) and a retracting device (60, 80) adapted to retract the retractable coupling (40),
wherein the apparatus comprises a safety mechanism (44) adapted to break before any other part or portion of the apparatus (10) breaks when the tension of the restraining of the vehicle exceeds a threshold value,
wherein the retractable coupling (40) comprises a first end attached to the locking device (30) and a second end (42) adapted to be releasably connected to the vehicle (1),
**characterised in that** the safety mechanism (44) is a perforation in the retractable coupling (40), and
wherein the safety mechanism (44) is present at the second end (42) of the retractable coupling (40).

2. Apparatus according to claim 1, wherein the retracting device (60, 80) comprises a spool (60) onto which the retractable coupling (40) is windable and a spring (80) biasing the spool (60) for retracting the retractable coupling (40).

3. Apparatus according to any of the preceding claims, wherein the retractable coupling (40) comprises an attachment means (41) adapted to be releasably connected to the vehicle (1) and the safety mechanism (44) releases the attachment means (41) from the apparatus when the tension of the restraining of the vehicle exceeds the threshold value.

4. Apparatus according to any of the preceding claims, wherein the second end has an attachment means (41) adapted to be releasably connected to the vehicle (1), wherein the safety mechanism releases the attachment means (41) from a major portion of the retractable coupling (40) at the second end of the retractable coupling (40) when the tension of the restraining of the vehicle exceeds the threshold value.

5. Apparatus according to any of the preceding claims, wherein the retractable coupling (40) comprises a band (43) and the band (43) comprises the safety mechanism (44).

6. Apparatus according to any of the preceding claims, wherein the threshold value of the tension of the restraining of the vehicle is in the interval 2 000 to 120 000 Newton, such as 7 500 to 100 000 Newton, such as 15 000 to 50 000 Newton, such as 30 000 to 40 000 Newton.

7. A control system (100) for control of restraining of a vehicle (1) at a loading dock (2), comprising an apparatus (10) according to any of the preceding claims and at least one sensor (101, 102) adapted to sense a tension of the retractable coupling (40).

8. Control system according to claim 7, wherein the control system comprises a first sensor (101) adapted to sense when the tension of the coupling (40) has reached a first load during restraining of the vehicle.

9. Control system according to claim 7, wherein the control system comprises a second sensor (102) adapted to sense when the tension of the coupling (40) has reached or exceeded a second load.

## Patentansprüche

1. Vorrichtung (10) zum Rückhalten eines Fahrzeugs (1) an einer Laderampe (2), umfassend
- eine zurückziehbare Kopplung (40), die angepasst ist, um mit dem Fahrzeug (1) zum Rückhalten des Fahrzeugs (1) lösbar verbunden zu werden,
- eine Verriegelungseinrichtung (30), die angepasst ist, um mit der Laderampe (2) verbunden zu werden, wobei die zurückziehbare Kopplung (40) mit der Verriegelungseinrichtung (30) verbunden ist, wobei die Verriegelungseinrichtung (30) eine zum Spannen der zurückziehbaren Kopplung (40) und zum Blockieren der Freigabe des Spannens der zurückziehbaren Kopplung (40) angepasste Rückhalte- und Blockiervorrichtung (70) und eine zum Zurückziehen der zurückziehbaren Kopplung (40) angepasste Rückziehvorrichtung (60, 80) umfasst,
wobei die Vorrichtung einen Sicherheitsmechanismus (44) umfasst, der angepasst ist, um vor dem Zerbrechen eines Teils oder Abschnitts der Vorrichtung (10) zu zerbrechen, wenn das Spannen des Rückhaltens des Fahrzeugs einen Schwellenwert überschreitet,
wobei die zurückziehbare Kopplung (40) ein an der Verriegelungseinrichtung (30) befestigtes erstes Ende und ein zweites Ende (42) umfasst, welches angepasst ist, um mit dem Fahrzeug (1) lösbar verbunden zu werden,
**dadurch gekennzeichnet, dass** der Sicherheitsmechanismus (44) eine Perforation in der zurückziehbaren Kopplung (40) ist,
wobei der Sicherheitsmechanismus (44) am zweiten Ende (42) der zurückziehbaren Kopplung (40) vorhanden ist.

2. Vorrichtung nach Anspruch 1, wobei die Rückziehvorrichtung (60, 80) eine Spule (60), auf welche die zurückziehbare Kopplung (40) aufwickelbar ist, und eine Feder (80) umfasst, welche die Spule (60) vorspannt, um die zurückziehbare Kopplung (40) zurückzuziehen.

3. Vorrichtung nach einem der vorgehenden Ansprüche, wobei die zurückziehbare Kopplung (40) ein Befestigungsmittel (41) umfasst, das angepasst ist, um mit dem Fahrzeug (1) lösbar verbunden zu werden, und der Sicherheitsmechanismus (44) das Befestigungsmittel (41) von der Vorrichtung freigibt, wenn das Spannen des Rückhaltens des Fahrzeugs den Schwellenwert überschreitet.

4. Vorrichtung nach einem der vorgehenden Ansprüche, wobei das zweite Ende ein Befestigungsmittel (41) aufweist, das angepasst ist, um mit dem Fahrzeug (1) lösbar verbunden zu werden, wobei der Sicherheitsmechanismus das Befestigungsmittel (41) von einem Hauptabschnitt der zurückziehbaren Kopplung (40) am zweiten Ende der zurückziehbaren Kopplung (40) freigibt, wenn das Spannen des Rückhaltens des Fahrzeugs den Schwellenwert überschreitet.

5. Vorrichtung nach einem der vorgehenden Ansprüche, wobei die zurückziehbare Kopplung (40) ein Band (43) umfasst, und das Band (43) den Sicherheitsmechanismus (44) umfasst.

6. Vorrichtung nach einem der vorgehenden Ansprüche, wobei der Schwellenwert des Spannens des Rückhaltens des Fahrzeugs innerhalb des Bereichs 2 000 bis 120 000 Newton, wie etwa 7 500 bis 100 000 Newton, wie etwa 15 000 bis 50 000 Newton, wie etwa 30 000 bis 40 000 Newton liegt.

7. Steuerungssystem (100) zur Steuerung des Rückhaltens eines Fahrzeugs (1) an einer Laderampe (2), umfassend eine Vorrichtung (10) nach einem der vorgehenden Ansprüche und mindestens einen Sensor (101, 102), der zum Erfassen eines Spannens der zurückziehbaren Kopplung (40) angepasst ist.

8. Steuerungssystem nach Anspruch 7, wobei das Steuerungssystem einen ersten Sensor (101) umfasst, der angepasst ist, um zu erfassen, wenn das Spannen der Kopplung (40) eine erste Last während des Rückhaltens des Fahrzeugs erreicht hat.

9. Steuerungssystem nach Anspruch 7, wobei das Steuerungssystem einen zweiten Sensor (102) umfasst, der angepasst ist, um zu erfassen, wenn das Spannen der Kopplung (40) eine zweite Last erreicht oder überschritten hat.

## Revendications

1. Dispositif (10) pour retenir un véhicule (1) sur un quai de chargement (2), comprenant
- un accouplement rétractable (40) adapté pour être relié de manière amovible au véhicule (1) pour retenir le véhicule (1),
- un dispositif de verrouillage (30) adapté pour être relié au quai de chargement (2), dans lequel le couplage rétractable (40) est relié au dispositif de verrouillage (30), le dispositif de verrouillage (30) comprenant un dispositif de contrainte et de blocage (70) adapté pour tendre l'accouplement rétractable (40) et bloquer le relâchement de la tension de l'accouplement rétractable (40) et un dispositif de rétraction (60, 80) adapté pour rétracter l'accouplement rétractable (40),
le dispositif comprenant un mécanisme de sécurité (44) adapté de manière à se briser avant que toute autre partie ou portion du dispositif (10) ne se brise lorsque la tension de la retenue du véhicule dépasse une valeur seuil,
l'accouplement rétractable (40) comprenant une première extrémité fixée au dispositif de verrouillage (30) et une deuxième extrémité (42) adaptée de manière à être reliée de manière amovible au véhicule (1),
**caractérisé en ce que** le mécanisme de sécurité (44) est une perforation dans l'accouplement rétractable (40), et
dans lequel le mécanisme de sécurité (44) est présent au niveau de la deuxième extrémité (42) de l'accouplement rétractable (40).

2. Dispositif selon la revendication 1, dans lequel le dispositif de rétraction (60, 80) comprend une bobine (60) sur laquelle l'accouplement rétractable (40) peut être enroulé et un ressort (80) sollicitant la bobine (60) pour rétracter l'accouplement rétractable (40).

3. Dispositif selon l'une quelconque des revendications précédentes, dans lequel l'accouplement rétractable (40) comprend un moyen de fixation (41) adapté de manière à être relié de manière amovible au véhicule (1) et le mécanisme de sécurité (44) libère le moyen de fixation (41) du dispositif lorsque la tension de la retenue du véhicule dépasse la valeur seuil.

4. Dispositif selon l'une quelconque des revendications précédentes, dans lequel la deuxième extrémité présente un moyen de fixation (41) adapté de manière à être relié de manière amovible au véhicule (1), dans lequel le mécanisme de sécurité libère le moyen de fixation (41) d'une portion majeure de l'accouplement rétractable (40) au niveau de la deuxième extrémité de l'accouplement rétractable (40) lorsque la tension de la retenue du véhicule dépasse la valeur seuil.

5. Dispositif selon l'une quelconque des revendications précédentes, dans lequel l'accouplement rétractable (40) comprend une bande (43) et la bande (43) comprend le mécanisme de sécurité (44).

6. Dispositif selon l'une quelconque des revendications précédentes, dans lequel la valeur de seuil de la tension de la retenue du véhicule est comprise dans l'intervalle de 2 000 à 120 000 Newton, telle que 7 500 à 100 000 Newton, telle que 15 000 à 50 000 Newton, tel que 30 000 à 40 000 Newton.

7. Système de commande (100) pour commander la retenue d'un véhicule (1) sur un quai de chargement (2), comprenant un dispositif (10) selon l'une quelconque des revendications précédentes et au moins un capteur (101, 102) adapté pour détecter une tension de l'accouplement rétractable (40).

8. Système de commande selon la revendication 7, dans lequel le système de commande comprend un premier capteur (101) adapté pour détecter le moment où la tension de l'accouplement (40) a atteint une première charge pendant la retenue du véhicule.

9. Système de commande selon la revendication 7, dans lequel le système de commande comprend un deuxième capteur (102) adapté pour détecter le moment où la tension de l'accouplement (40) a atteint ou surpassé une deuxième charge.
